# EUROPEAN PATENT SPECIFICATION

(11) **EP 3 663 554 B1**
(45) Date of publication and mention of the grant of the patent: **18.01.2023**
(21) Application number: 18425097.5
(22) Date of filing: 07.12.2018
(51) Int. Cl.: F01P 3/18, B60K 11/04, B62K 5/025

(54) **MOTORVEHICLE COMPRISING A REAR ENGINE AND AN IMPROVED COOLING SYSTEM**
KRAFTFAHRZEUG MIT EINEM HECKMOTOR UND EINEM VERBESSERTEN KÜHLSYSTEM
VEHICULE COMPRENANT UN MOTEUR ARRIÈRE ET UN SYSTÈME DE REFROIDISSEMENT AMÉLIORÉ

(43) Date of publication of application: 10.06.2020
(73) Proprietor: PIAGGIO & C. S.p.A., 56025 Pontedera (Pisa) (IT)
(72) Inventor: Gupta, Nitin, 411006 Pune (IN); Prabhune, Hemant, 411006 Pune (IN)
(74) Representative: Carangelo, Pierluigi

(56) References cited:
- FR-A1- 2 972 684
- GB-A- 423 718
- JP-A- S61 146 635
- JP-A- 2008 080 859

## Description

### TECHNICAL FIELD OF THE INVENTION

The present invention concerns the technical field of the motorvehicles for the transport of passengers and/or goods and in particular concerns a motorvehicle comprising a rear engine and an improved cooling system.

### BACKGROUND OF THE INVENTION

As it is well known, in all the motorvehicles comprising an engine it is necessary to cool the engine. For this purpose, air or liquid cooling systems for engines are well known and widely employed. Liquid cooling systems generally comprise a cooling circuit in fluid communication with a radiator.

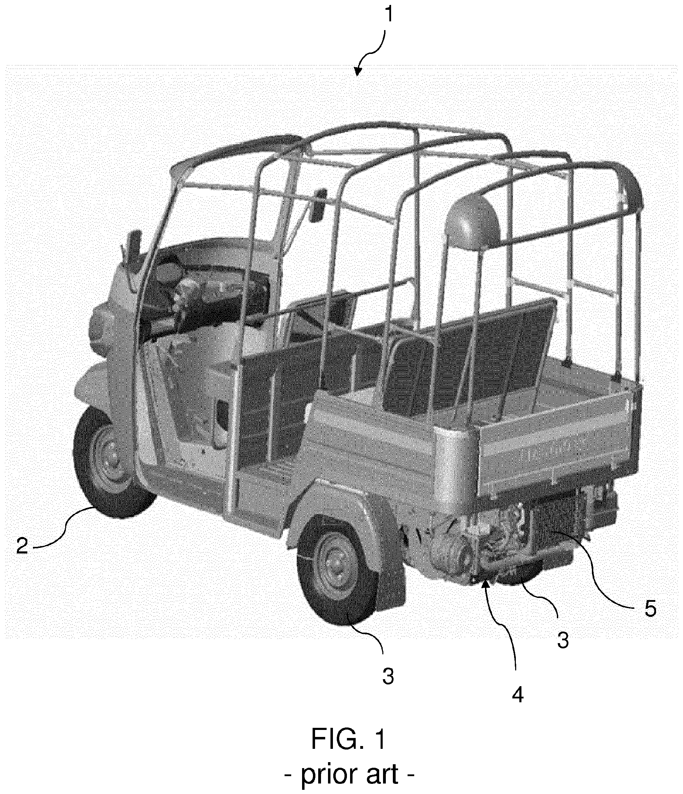

In some motorvehicles of the known art, the engine is mounted in the rear part of the motorvehicle body. One non-limiting example of said motorvehicles is shown in the annexed figure 1. The motorvehicle 1 of figure 1 is a three-wheeled motorvehicle with one steering front wheel 2 and two rear wheels 3.

As it is possible to observe in figure 1, in the prior art motorvehicle 1 the engine 4 is mounted in the rear part of the motorvehicle body. The motorvehicle 1 comprises a cooling system of the engine 4 comprising a radiator 5. The radiator 5 is mounted in the rear part of the motorvehicle body, in particular in the rearmost part of the motorvehicle body, in such a way that the mounting order starting from the rear axle towards the rearmost part of the motorvehicle body is: rear axle, engine 4, radiator 5. Moreover, the cooling system comprises a cooling fan, not shown in figure 1, which is associated to the radiator 5.

In a motorvehicle 1 as shown in figure 1, there are two possible known strategies for cooling the radiator 5 using the cooling fan.

According to the first cooling strategy, the cooling fan pulls air from the engine side and pushes it towards the radiator 5. Since the air pulled from the engine side is in general hot, in this case, the radiator 5 never runs on full efficiency and the duty cycle of the cooling fan is relatively high.

According the second cooling strategy, the cooling fan pulls air form the rear side of the motorvehicle 1 and pushes it towards the engine side. In this case, the forced airflow produced by the cooling fan always runs in the opposite direction of the natural airflow caused by the motorvehicle 1 movement in the forward direction. For this reason, this cooling strategy is affected by the drawback of lack of efficiency and also by the drawback of increasing the temperature of the passengers compartment, thus negatively affecting also the comfort of the passengers during the use of the motorvehicle. Another motorvehicle presenting a rear mounted engine and radiator is shown in JP S61 146635.

An object of the present invention is to provide a motorvehicle comprising a rear engine and an improved cooling system which is adapted to overcome in full or at least in part the drawbacks that affect the above-described cooling systems of the prior art. More in particular, the present invention aims to provide a solution characterized by better performances in terms of: engine cooling efficiency, engine life, fuel consumption and passenger's comfort.

The above object is reached by a motorvehicle as defined in the annexed claim 1 in its most general embodiment thereof. Advantageous and preferred embodiments of the aforesaid motorvehicle are defined in the annexed dependent claims.

The invention will be better understood from the following detailed description of preferred embodiments thereof, made by way of non-limiting example with reference to the accompanying drawings briefly described in the following paragraph.

### BRIEF DESCRIPTION OF THE DRAWINGS

Figure 1 shows a rear side perspective view of a prior art motorvehicle having a rear engine.
Figure 2 shows a partial and schematic perspective view of a non-limiting embodiment of a motorvehicle according to the present invention.
Figure 3 shows a partial and schematic perspective view of a rear part of the motorvehicle of figure 2.
Figure 4 shows a partial and schematic lateral view of the rear part of the motorvehicle of figure 2.
Figure 5 shows a partial top view of the motorvehicle of figure 2.
Figure 6 shows a partial lateral view of the motorvehicle of figure 2.

### DETAILED DESCRIPTION OF THE INVENTION

The following description of one or more embodiments of the invention refers to the attached figures. The same numerical references in the figures identify equal or similar elements. The figures are not necessarily represented in scale. Furthermore, the following detailed description must not be considered limiting of the invention itself. The object of the invention is defined by the appended claims. The technical details, structures or characteristics of the solutions described below may be combined in any manner and in any way, unless it is explicitly stated that some features or solutions are alternatives to each other or is not apparent from the following description that two or more features or embodiments are incompatible with each other.

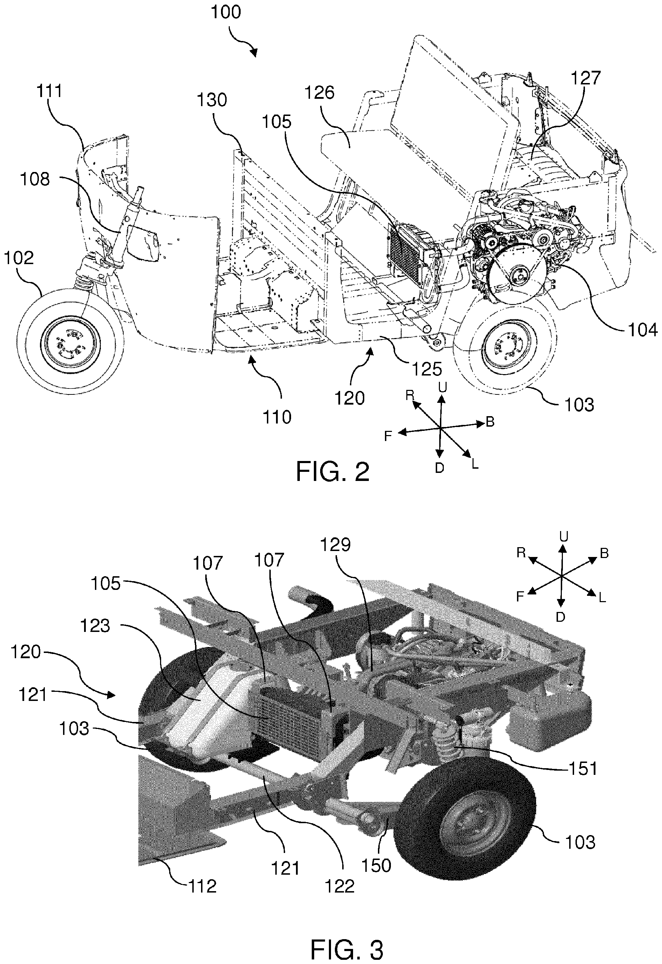

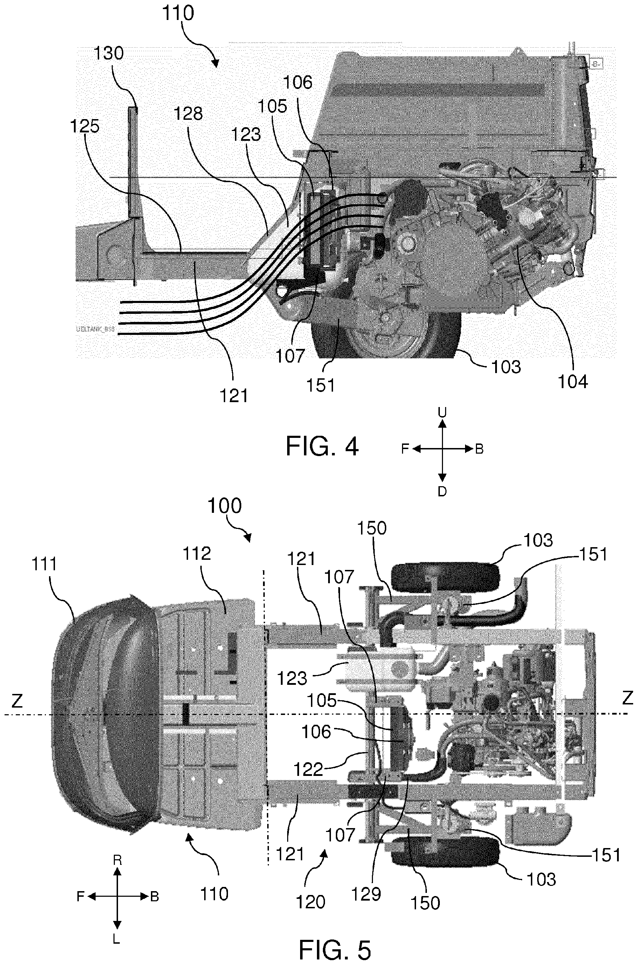

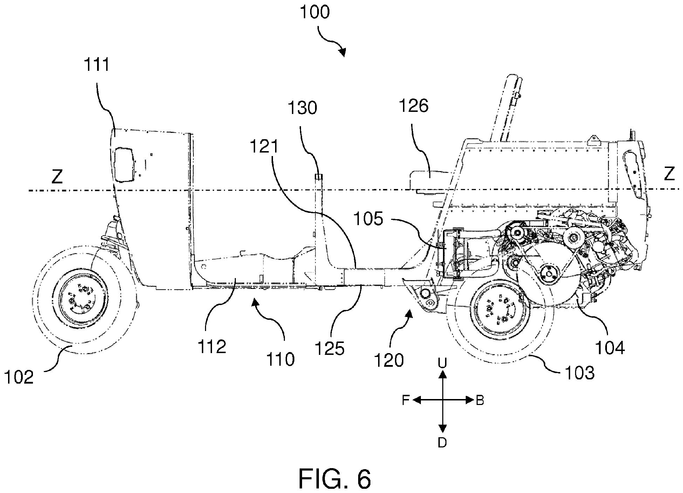

The annexed figures 2-6 show a non-limiting embodiment of a motorvehicle 100 comprising a rear engine 104.

According to an embodiment, the motorvehicle 100 is a three-wheeled vehicle used to transport objects and / or persons. In particular, the three wheeled motorvehicle 100 comprises a steering front wheel 102 and a pair of rear wheels 103. The steering front wheel 102 is adapted and configured to be rotated around a steering axis through a steering bar 108. In turn, the steering bar 108 is adapted and configured to be steered through an handlebar or through a steering wheel operated by the driver and not shown in the figures.

According to an embodiment, the motorvehicle 100 is a three-wheeled motorvehicle symmetrical, or substantially symmetrical, with respect to the median longitudinal axis of the motorvehicle 100. According to a preferred embodiment, the motorvehicle 100 is a vehicle of the type marketed by the Applicant under the trade name "Ape" in any one of the respective embodiments. Preferably, the rear wheels 103 of the motorcycle 100 are traction wheels and for this reason said rear wheels 103 are operatively connected to the rear engine 104 through any suitable transmission system.

From now on, in the present description reference will be made to a generic motorvehicle 100, meaning that the following description is generally applicable to any type of motorvehicle 100 comprising:
- a rear engine 104;
- a cooling system of the rear engine 104, wherein the cooling system comprises a radiator 105;
- a motorvehicle body 110,120 supporting the rear engine 104, wherein the motorvehicle body extends along a longitudinal axis L-L and comprises a front portion 110 and a rear portion 120, the rear engine 104 being arranged in said rear portion 120.

The longitudinal axis L-L of the motorvehicle body is an axis which is parallel to the travel axis of the motorvehicle 100 when the motorvehicle 100 runs along a straight direction.

Preferably, the cooling system is a water cooling system.

According to a preferred embodiment, the front portion 110 of the motorvehicle body comprises a front chassis 111, a front footstep 112 and houses a driver's seat (not shown in the figures).

According to a preferred embodiment, the rear portion 120 of the motorvehicle body 110, 120 comprises a rear footstep 125, a passengers' seat 126 and more preferably also an open-type luggage compartment 127. In particular, the luggage compartment 127 is an open tray defined in the rear portion 120.

Preferably, between the front portion 110 and the rear portion 120, the motorvehicle body 110,120 comprises a partition wall 130 which divides a driver's cell arranged in the front portion 110 from a passenger's cell arranged in the rear portion 120.

In the motorvehicle 100, the radiator 105 is arranged, along the longitudinal axis L-L, between the front portion 110 and the rear engine 104.

According to an advantageous embodiment, the cooling system further comprises a cooling fan 106 arranged between the radiator 105 and the rear engine 104. Preferably, the cooling fan 106 is attached to the radiator so as to cover one of the main faces thereof. The blades of the cooling fan 106 and its sense of rotation are selected so to pull air from the radiator 105 accordingly to a front-back direction of the motorvehicle 100. In this way, the airflow sucked by the cooling fan 106 is concurrent with the direction of airflow when the motorvehicle 100 is advancing. Alternatively, the cooling fan 106 can be arranged in front of the radiator 105, thus upstream the radiator 105 with respect to the rear engine 104. In this case, the blades of the cooling fan 106 and its sense of rotation are chosen so to push air into the radiator 105 accordingly to a front-back direction of the motorvehicle 100.

Preferably, a ducting system 129 connects the radiator 105 with the engine 104.

According to an advantageous embodiment, the motorvehicle 100 comprises a fuel tank 123 adapted and configured to be filled with fuel for feeding the rear engine 104, and the fuel tank 123 is arranged alongside said radiator 105. Thanks to this expedient, the fuel tank 123 is less exposed to the flow of hot air coming from the radiator 105.

According to an advantageous embodiment, the rear portion 120 of the motorvehicle body 110, 120 comprises a rear frame. The rear frame comprises two longitudinal frame members 121 and a cross member 122 fixed and arranged between said longitudinal frame members 121 and the radiator 105 is mounted on said cross member 122, preferably above said cross member 122. According to a particularly advantageous embodiments, the radiator 105 is arranged relatively closer to the cross member 122 and relatively farther from the engine 104.

Preferably, the motorvehicle 100 comprises at least one support and fixing stirrup 107, more preferably two support and fixing stirrups 107, for mechanically coupling the radiator 105 to the cross member 122. More preferably, the motorcycle 100 comprises two rear wheels group, each comprising an associated rear wheel 103, and the cross member 122 supports said two rear wheels group. According to a particularly advantageous embodiment, the radiator 105 is arranged between said cross member 122 and said rear wheels 103. Thanks to this expedient, the arrangement of the parts in the rear portion 110 of the motorcycle body 110, 120 is optimized insofar as the space occupancy is concerned.

According to a preferred embodiment, each of the above mentioned rear wheel groups comprises:
- A rear wheel 103;
- An oscillating arm 150 having and end portion pivotally hinged to the cross member 122;
- A shock absorber 151.

In the above embodiment, preferably each of the rear wheels 103 is rotatably fixed to a respective oscillating arm 150.

According to an advantageous embodiment, the rear portion 120 of the motorcycle 100 is a cargo portion and comprises the passengers' seat 126. Preferably, said radiator 105 is arranged under said passengers' seat 126. In this way, the motorvehicle 100 is longitudinally more compact.

In order to further improve the cooling efficiency, according to an embodiment the motorvehicle body 110,120 comprises a bottom side facing the ground and the cooling system is adapted and configured to draw air from said bottom side and direct it towards said radiator 105. According to a more preferred embodiment, the bottom side of the rear portion 120 of the motorvehicle body 110,120, which is under the engine 104 and the radiator 105, is completely open, i.e. does not include any closing panel. In this way, when the motorvehicle 100 is running, the air flowing below the motorvehicle 100 can enter easily in the area where the radiator 105 and the rear engine 104 are arranged.

According to a particularly advantageous embodiment, the rear portion 120 comprises between the rear footstep 125 and the passengers' seat 126 an inclined wall 128 which starting from the rear footstep 125 raises towards the passengers' seat 126. This particular arrangement of the inclined wall 128 allows to deviate the air flowing under the vehicle 100 upwards towards the radiator 105. Furthermore, in this arrangement the rear footstep 125 facilitates the passengers boarding on the passengers' seat 126.

Based on the above explanation it is thus possible to understand how a motorvehicle 100 of the type described above allows the objects stated above with reference to the state of the prior art to be achieved.

Obviously, a person skilled in art may make further changes and variants to the motorvehicle described above all without departing from the scope of protection of the invention, as defined in the following claims.

## Claims

1. Motorvehicle (100) comprising:
- a rear engine (104);
- a cooling system of the rear engine (104), wherein the cooling system comprises a radiator (105);
- a motorvehicle body (110,120) supporting the rear engine (104), wherein the motorvehicle body extends along a longitudinal axis (L-L) and comprises a front portion (110) and a rear portion (120), the rear engine (104) being arranged in said rear portion (120);
- a driver's seat arranged in the front portion (110);
- a passengers' seat (126) arranged in the rear portion (120);
**characterized in that** the radiator (105) is arranged, along the longitudinal axis (L-L), between the front portion (110) and the rear engine (104) and under said passengers' seat (126).

2. A motorvehicle (100) according to claim 1, wherein said motorvehicle (100) is a three-wheeled motorvehicle comprising a front steering wheel (102) and two rear wheels (103).

3. A motorvehicle (100) according to claims 1 or 2, wherein the cooling system further comprises a cooling fan (106) arranged between the radiator (105) and the rear engine (104).

4. A motorvehicle (100) according to any one of the previous claims, further comprising a fuel tank (123) adapted and configured to be filled with fuel for feeding the rear engine (104), wherein the fuel tank is arranged alongside said radiator (105).

5. A motorvehicle (100) according to any one of the previous claims, wherein the rear portion (120) comprises a rear frame, wherein said rear frame comprises two longitudinal frame members (121) and a cross member (122) fixed and arranged between said longitudinal frame members (121), wherein said radiator (105) is mounted on said cross member (122).

6. A motorvehicle (100) according to claim 5, wherein said motorvehicle (100) comprises two rear wheels group, each comprising an associated rear wheel (103), and wherein said cross member (122) supports said two rear wheels group.

7. A motorvehicle (100) according to claims 5 or 6, wherein the radiator (105) is arranged between said cross member (122) and said rear wheels (103).

8. A motorvehicle (100) according to any one of the previous claims, wherein said rear portion (110) comprises a cargo portion.

9. A motorvehicle (100) according to claim 8, wherein the rear portion (120) comprises a rear footstep (125) and further comprises between the rear footstep (125) and the passengers' seat (126) an inclined wall (128) that starting from the rear footstep (125) raises towards the passengers' seat (126).

10. A motorvehicle (100) according to any one of the previous claims, wherein said motorvehicle body (110,120) comprises a bottom side facing the ground and wherein said cooling system is adapted and configured to draw air from said bottom side and direct it towards said radiator (105).

## Patentansprüche

1. Kraftfahrzeug (100), umfassend:
- einen Heckmotor (104);
- ein Kühlsystem des Heckmotors (104), wobei das Kühlsystem einen Kühler (105) umfasst;
- eine Kraftfahrzeugkarosserie (110, 120), die den Heckmotor (104) trägt, wobei sich die Kraftfahrzeugkarosserie entlang einer Längsachse (L-L) erstreckt und einen vorderen Abschnitt (110) und einen hinteren Abschnitt (120) umfasst, wobei der Heckmotor (104) in dem hinteren Abschnitt (120) angeordnet ist;
- einen im vorderen Abschnitt (110) angeordneten Fahrersitz;
- einen im hinteren Abschnitt (120) angeordneten Passagiersitz (126);
**dadurch gekennzeichnet, dass** der Kühler (105) entlang der Längsachse (L-L) zwischen dem vorderen Abschnitt (110) und dem Heckmotor (104) und unter dem Passagiersitz (126) angeordnet ist.

2. Kraftfahrzeug (100) nach Anspruch 1, wobei das Kraftfahrzeug (100) ein dreirädriges Kraftfahrzeug ist, das ein lenkbares Vorderrad (102) und zwei Hinterräder (103) umfasst.

3. Kraftfahrzeug (100) nach Anspruch 1 oder 2, wobei das Kühlsystem ferner ein Kühlgebläse (106) umfasst, das zwischen dem Kühler (105) und dem Heckmotor (104) angeordnet ist.

4. Kraftfahrzeug (100) nach einem der vorhergehenden Ansprüche, das ferner einen Kraftstofftank (123) umfasst, der ausgelegt und konfiguriert ist, um mit Kraftstoff zum Zuführen an den Heckmotor (104) befüllt zu werden, wobei der Kraftstofftank neben dem Kühler (105) angeordnet ist.

5. Kraftfahrzeug (100) nach einem der vorhergehenden Ansprüche, wobei der hintere Abschnitt (120) einen hinteren Rahmen umfasst, wobei der hintere Rahmen zwei Längsrahmenelemente (121) und einen zwischen den Längsrahmenelementen (121) befestigten und angeordneten Querträger (122) umfasst, wobei der Kühler (105) an dem Querträger (122) angebracht ist.

6. Kraftfahrzeug (100) nach Anspruch 5, wobei das Kraftfahrzeug (100) zwei Hinterradgruppen umfasst, die jeweils ein zugehöriges Hinterrad (103) umfassen, und wobei der Querträger (122) die zwei Hinterradgruppen trägt.

7. Kraftfahrzeug (100) nach Anspruch 5 oder 6, wobei der Kühler (105) zwischen dem Querträger (122) und den Hinterrädern (103) angeordnet ist.

8. Kraftfahrzeug (100) nach einem der vorhergehenden Ansprüche, wobei der hintere Abschnitt (110) einen Frachtabschnitt umfasst.

9. Kraftfahrzeug (100) nach Anspruch 8, wobei der hintere Abschnitt (120) eine hintere Trittstufe (125) umfasst und ferner zwischen der hinteren Trittstufe (125) und dem Passagiersitz (126) eine geneigte Wand (128) umfasst, die an der hinteren Trittstufe (125) beginnt und zum Passagiersitz (126) ansteigt.

10. Kraftfahrzeug (100) nach einem der vorhergehenden Ansprüche, wobei die Kraftfahrzeugkarosserie (110, 120) eine dem Boden zugewandte Unterseite umfasst und wobei das Kühlsystem ausgelegt und konfiguriert ist, um Luft von der Unterseite anzusaugen und sie zu dem Kühler (105) zu leiten.

## Revendications

1. Véhicule automobile (100) comprenant :
- un moteur arrière (104) ;
- un système de refroidissement du moteur arrière (104), le système de refroidissement comprenant un radiateur (105) ;
- une carrosserie de véhicule automobile (110, 120) soutenant le moteur arrière (104), la carrosserie de véhicule automobile s'étendant le long d'un axe longitudinal (LL) et comprenant une partie avant (110) et une partie arrière (120), le moteur arrière (104) étant agencé dans ladite partie arrière (120) ;
- un siège conducteur, agencé dans la partie avant (110) ;
- un siège passager (126), agencé dans la partie arrière (120) ;
**caractérisé en ce que** le radiateur (105) est agencé, selon l'axe longitudinal (LL), entre la partie avant (110) et le moteur arrière (104) et sous ledit siège passager (126).

2. Véhicule automobile (100) selon la revendication 1, ledit véhicule automobile (100) étant un véhicule automobile à trois roues comprenant une roue directrice avant (102) et deux roues arrière (103).

3. Véhicule automobile (100) selon la revendication 1 ou 2, le système de refroidissement comprenant en outre un ventilateur de refroidissement (106) agencé entre le radiateur (105) et le moteur arrière (104).

4. Véhicule automobile (100) selon l'une quelconque des revendications précédentes, comprenant en outre un réservoir de carburant (123) apte à et conçu pour être rempli de carburant pour alimenter le moteur arrière (104), le réservoir de carburant étant agencé le long dudit radiateur (105).

5. Véhicule automobile (100) selon l'une quelconque des revendications précédentes, la partie arrière (120) comprenant un châssis arrière, ledit châssis arrière comprenant deux éléments longitudinaux de châssis (121) et une traverse (122) fixée et agencée entre lesdits éléments longitudinaux de châssis (121), ledit radiateur (105) étant monté sur ladite traverse (122).

6. Véhicule automobile (100) selon la revendication 5, ledit véhicule automobile (100) comprenant deux groupes de roues arrière, comprenant chacun une roue arrière associée (103) et ladite traverse (122) soutenant ledit groupe de deux roues arrière.

7. Véhicule automobile (100) selon les revendications 5 ou 6, le radiateur (105) étant agencé entre ladite traverse (122) et lesdites roues arrière (103).

8. Véhicule automobile (100) selon l'une quelconque des revendications précédentes, ladite partie arrière (110) comprenant une partie de chargement.

9. Véhicule automobile (100) selon la revendication 8, la partie arrière (120) comprenant un marchepied arrière (125) et comprenant en outre, entre le marchepied arrière (125) et le siège passager (126), une paroi inclinée (128) qui à partir du marchepied arrière (125) s'élève vers le siège passager (126).

10. Véhicule automobile (100) selon l'une quelconque des revendications précédentes, dans lequel ladite carrosserie de véhicule automobile (110, 120) comprend un côté inférieur faisant face au sol et ledit système de refroidissement étant apte à et conçu pour aspirer l'air dudit côté inférieur et pour le diriger vers ledit radiateur (105).
